# EUROPÄISCHE PATENTSCHRIFT

(11) **EP 1 136 195 B1**
(45) Veröffentlichungstag und Bekanntmachung des Hinweises auf die Patenterteilung: **14.11.2007**
(21) Anmeldenummer: 01107110.7
(22) Anmeldetag: 22.03.2001
(51) Int. Cl.: B25J 15/00, F16B 7/18

(54) **Modular aufbaubare Tragvorrichtung zum Tragen von Werkzeugen, Werkstücken oder dgl.**
Modular structure for supporting tools, workpieces or similar
Structure modulaire pour support d'outils, de pièces ou similaires

(30) Priorität: 24.03.2000 DE 10014785
(43) Veröffentlichungstag der Anmeldung: 26.09.2001
(73) Patentinhaber: Rieger, Dieter-Heinz, 28239 Bremen (DE); Wartnig, Andreas, 28832 Achim (DE); Springer, Uwe, 28816 Stuhr (DE)
(72) Erfinder: Rieger, Dieter-Heinz, 28239 Bremen (DE); Wartnig, Andreas, 28832 Achim (DE); Springer, Uwe, 28816 Stuhr (DE)
(74) Vertreter: Eisenführ, Speiser & Partner

(56) Entgegenhaltungen:
- EP-A- 1 020 259
- DE-U- 20 017 129
- DE-U- 29 905 687
- FR-A- 2 544 051
- LU-A- 53 552
- NL-A- 9 400 945

## Beschreibung

Die vorliegende Erfindung betrifft eine Modular aufbaubare Tragvorrichtung zum Tragen von Werkzeugen, Werkstücken oder dgl., insbesondere für die automatisierte Handhabung von Werkstücken, mit mindestens einem rohrartigen Hohlprofilträger zum Tragen des Werkzeugs oder dgl., in dessen Wänden paarweise gegenüberliegende Bohrungen ausgebildet sind, und mit mindestens einer Befestigungsschraube zur Befestigung eines Werkzeugs, Werkstücks, eines weiteren Befestigungselements oder eines weiteren Hohlprofilträgers an dem Hohlprofilträger, wobei die Befestigungsschraube in gegenüberliegende Bohrungen des Hohlprofilträgers einführbar ist.

Bei der automatisierten Handhabung von Werkstücken mit Hilfe von Robotern werden ausvielen Bestandteilen modular aufbaubare Tragvorrichtungen eingesetzt, die dabei ein Bindeglied zwischen einem Roboter und einem Werkstück darstellen.

Beispielsweise werden Sie zum Transport von Blechen an Transfer- und Stufenpressen in der Automobilindustrie eingesetzt, um die Bleche von einem Gesenk zu einem anderen Gesenk zu transportieren. Die Tragvorrichtung ist einerseits an einem Roboterarm montiert und weist andererseits Greifer, etwa Vakuumsaugköpfe auf, die ein Blech greifen und später wieder loslassen. Darüber hinaus können an der Tragvorrichtung Sensoren befestigt sein, um ein Signal bereitzustellen, welches eine Auskunft darüber gibt, ob ein Werkstück vorhanden ist oder nicht. Die Greifer oder Sensoren müssen genau an der Tragvorrichtung positioniert sein, damit das Werkstück sicher aufgenommen wird und die Sensoren das Werkstück zuverlässig erfassen können.

Eine modular aufbaubare Tragvorrichtung der eingangs genannten Art ist von einer Firma Witte Gerätebau bekannt geworden. Eine Vielzahl von rohrartigen Hohlprofilträgern sind mit Hilfe von Befestigungsschrauben aneinander befestigt, wobei eine Befestigungsschraube durch die in gegenüberliegenden Seitenwänden ausgebildeten Bohrungen eines Hohlprofilträgers hindurchgesteckt und mit Ihrem Außengewinde in ein Innengewinde eines rohrartigen, länglichen Druckstücks eingeschraubt ist, welches seinerseits durch gegenüberliegende, in Wandabschnitten ausgebildeten Bohrungen eines benachbarten Hohlprofilträgers hindurchgesteckt sind, so dass bei Anziehen der Befestigungsschraube die benachbarten Hohlprofilträger miteinander verspannt und dadurch aneinander befestigt sind. Diese Tragvorrichtung weist eine Reihe von Nachteilen auf. Die Art der Befestigung mit Hilfe der rohrartigen, durch die Durchgangsbohrungen hindurchgesteckten Druckstücke ist verhältnismäßig aufwendig, da in den rohrartigen Druckstücken Innengewinde erzeugt werden müssen. Darüber hinaus sind die miteinander befestigten Hohlprofilträger nicht in einer genau definierten Position relativ zueinander fixierbar. Dies hat zur Folge, dass sich letzlich die Werkzeuge, die an der Tragvorrichtung befestigt werden müssen, beispielsweise Greifer, nicht exakt in der gewünschten Position anbringen lassen. Insbesondere ist es nur mit hohem Einstellaufwand möglich, die einzelnen Bestandteile der Tragvorrichtung die Werkzeuge oder dgl. in die gewünschte Position zu bringen. Eine exakt reproduzierbare Einstellung der Tragvorrichtung ist nur mit erheblichem Aufwand möglich.

Aus NL 9400945 ist ein modulares Baugerüst bekannt, bei dem mehrere Gerüstrohre miteinander verbunden werden. Zu diesem Zweck sind in den Gerüstrohren radial ausgerichtete Bohrungen gebohrt, durch die eine Befestigungsschraube mit aufgeschobener Zentrierhülse hindurch gesteckt werden kann. Der Kopf der Befestigungsschraube stützt sich im Bereich der Bohrung des Rohres ab und das Gewinde der Schraube greift in ein in axialer Richtung in den Endbereich des anzusetzendem Rohres eingeschnittenes Gewinde ein.

Die so erzielte Verbindung der beiden Rohre genügt lediglich den im Gerüstbau erforderlichen Positioniergenauigkeiten und kann nicht für die hohen Toleranzanforderungen für Vorrichtungen der eingangs genannten Art verwendet werden.

Die Aufgabe der vorliegenden Erfindung besteht darin, eine modular aufbaubare Tragvorrichtung bereitzustellen, mit der Werkzeuge, Werkstücke, Messgeräte oder dgl. auf einfache Weise in einer exakt vorgebbaren Position gehalten werden können. Insbesondere soll eine flexible Tragvorrichtung für die automatisierte Handhabung von Karosserieblechen in der Automobilbranche bereitgestellt werden.

Die Vorteile der Erfindung bestehen im wesentlichen darin, dass die Befestigungsschraube aufgrund von zwei an einen Schaft der Befestigungsschraube angeformten Zentrierabschnitten auf einfache Weise exakt an dem Hohlprofilträger positioniert ist und somit auch mit Hilfe der Befestigungsschraube an dem Hohlprofilträger befestigte weitere Bauteile exakt in einer bestimmten definierten Position fixierbar sind; bei derartigen weiteren Bauteilen kann es sich um weitere Hohlprofilträger handeln, aus denen insgesamt eine ggf. komplexe Tragvorrichtung gebildet ist, oder um Greifer, Werkstücke, Messgeräte, Sensoren oder dgl. Die Befestigungsschraube ist immer exakt und wiederholbar aufbaubar, beispielsweise nach einer Demontage oder Neumontage oder Austausch einer beschädigten Tragvorrichtung. Auch wird die Bereithaltung einer Ersatzvorrichtung vermieden. Einzelne Teile können einfach ausgetauscht werden. Vor Installation in eine Produktionsanlage kann die Tragvorrichtung exakt voreingestellt werden, was die Einbauzeit in die Produktionsanlage und damit die Standzeit reduziert. Anschlußkabel oder Schläuche können in die Hohlprofilträger geschützt eingelegt werden.

Bei einer besonders bevorzugten Ausführungsform der Erfindung ist vorgesehen, dass die Befestigungsschraube einen im montierten Zustand von dem Hohlprofilträger abstehenden Befestigungsabschnitt zur Anbringung eines Werkzeugs, Werkstücks o. dgl. aufweist. Der Befestigungsabschnitt ist zweckmäßiger Weise als Rohr oder Stange und einstückig mit der Befestigungsschraube ausgebildet. Aufgrund der Zentrierabschnitte der Befestigungsschraube ist der als Rohr oder Stange ausgebildete Befestigungsabschnitt, an die dann ein Greifer, ein Messgerät oder dgl. befestigt werden kann, in einer genau definierten und vorgebbaren Stellung relativ zu der Tragvorrichtung angeordnet.

Gemäß einer alternativen Ausführungsform der Erfindung ist vorgesehen, dass an der Befestigungsschraube ein sich von einer Bohrung zu einer weiteren Bohrung des Hohlprofilträgers erstreckender Ansatz ausgebildet ist, der einen in die benachbarte Bohrung einführbaren Vorsprung aufweist, so dass die Befestigungsschraube - und der Ansatz - in definierter Drehstellung an dem Hohlprofilträger fixierbar ist. Eine Verdrehung der Befestigungsschraube und somit eines mit Hilfe dieser an dem Hohlprofilträger montierten weiteren Bauteils kann auf konstruktiv einfache und zuverlässige Weise vermieden werden.

Bei einer bevorzugten Ausführungsform der Erfindung ist vorgesehen, dass an dem Hohlprofilträger und/oder dem Befestigungsabschnitt einer Befestigungsschraube und/oder einem Ansatz einer Befestigungsschraube Markierungen ausgebildet oder angebracht sind.

Mit Hilfe dieser Markierungen, die in definierten Abständen oder Winkeln angeordnet sind, lässt sich die Tragvorrichtung einfach und wiederholbar aufbauen. So kann beispielsweise ausgehend von einem Ende des Hohlprofilträgers ein weiterer Hohlprofilträger mittels einer erfindungsgemäßen Befestigungsschraube an einer bestimmten Markierung befestigt werden auf Grundlage eines Bauplans, um eine für den jeweiligen Anwendungsfall vorgegegebene geometrische Struktur der Tragvorrichtung zu erzielen, welche an ein Bauteil wie beispielsweise ein Blech einer Kraftfahrzeugkarosserie angepasst ist. Mit Hilfe der Markierungen lässt es sich vermeiden, dass eine Tragvorrichtung aus individuell zuzuschneidenden Einzelelementen, wie Rohrabschnitten, Stangen oder dgl. zusammengesetzt wird, was sehr zeitaufwendig ist, oder dass sogar bei bestimmten Produktionsprozessen wie etwa in der Automobilindustrie, mehrere identische Tragvorrichtungen als Reserve vorgehalten werden müssen, was hohe Investitionskosten verursacht. So kann allein aufgrund eines Bauplans an den definierbaren Markierungen etwa ein Verbindungsstück oder Greifer oder dgl. montiert werden. Die Markierungen sind vorzugsweise als Nuten, Einfräsungen oder Erhebungen ausgebildet. Sie könnten auch in Form von aufklebbaren Streifen oder dgl. ausgebildet sein. An den Hohlprofilträgern können die in gleichen Abständen zueinander angeordneten Bohrungen selbst die Markierungen sein, oder es sind in gleichen Abständen die Liniennuten oder dgl. angebracht.

Gemäß einer Weiterbildung der Erfindung weist eine erfindungsgemäße Befestigungsschraube zwei Gewinde auf, die im montierten Zustand nach außen von gegenüberliegenden Wandabschnitten des Hohlprofilträgers abstehen, so dass Muttern oder andere Bauteile auf die Gewinde aufschraubbar sind. Zweckmäßigerweise weist die Befestigungsschraube einen Mutternkopf und/oder eine Ausnehmung zum formschlüssigen Ansetzen eines Drehwerkzeugs zum Drehen der Befestigungsschraube auf.

Sollen mehrere Hohlprofilträger aneinerander befestigt werden, um beispielsweise einen komplexeren Rahmen zu bilden, sind zur Erhöhung der Winkelsteifigkeit zwei aneinander befestigte Hohlprofilträger mittels eines mehrere Bohrungen aufweisenden Versteifungsblechs aneinander fixiert.

Gemäß eines weiteren Aspekts der Erfindung wird vorgeschlagen, dass bei einer Vorrichtung der eingangs genannten Art an einem Endabschnitt eines Hohlprofilträgers ein Gewinde ausgebildet ist und dass eine Befestigungsschraube durch die gegenüberliegenden Bohrungen eines ersten Hohlprofilträgers hindurchgesteckt ist und mit ihrem Gewinde mit dem an dem weiteren Hohlprofilträger ausgebildeten Gewinde verschraubt ist, so dass zwei Hohlprofilträger aneinander befestigt sind. Auf diese Weise lassen sich zwei Hohlprofilträger in einer bestimmten Winkelstellung relativ zueinander auf einfache Weise lösbar aneinander befestigen. Gemäß einer Weiterbildung ist das Gewinde des Hohlprofilträgers an einer mit dem Hohlprofilträger verschweissten Endplatte ausgebildet ist. Zur schrägwinkligen Anordnung zweier Hohlprofilträger wird vorgeschlagen, dass die Gewinde aufweisende Endplatte schrägwinklig relativ zu einer Längsachse des Hohlträgerprofils angeordnet ist.

Vorzugsweise haben die Hohlprofilträger einen quadratischen Querschnitt und die Bohrungen sind in gleichen Abständen oder einer gleichmäßigen Rasterteilung angeordnet, so dass sich ein einfach montierbares Baukastensystem ergibt, das eine hohe Gestaltungsfreiheit zulässt.

Die Erfindung ist nachstehend anhand von Ausführungsbeispielen unter Bezugnahme auf die Zeichnungen beschrieben.
- Figur 1: ein Ausführungsbeispiel einer aus einzelnen Modulen aufgebauten erfindungsgemäßen Tragvorrichtung in einer perspektivischen Darstellung;
- Figur 2: ein Teil des Ausführungsbeispiels gemäß Fig. 1 in einer perspektivischen Darstellung;
- Figur 3: eine Explosionsdarstellung eines Teils einer alternativen Tragvorrichtung;
- Figur 4: mehrere Bestandteile einer erfindungsgemäßen Tragvorrichtung in perspektivischer Darstellung;
- Figur 5: eine erfindungsgemäße Befestigungsschraube in zwei Seitenansichten;
- Figur 6: eine weitere erfindungsgemäße Befestigungsschraube in einer Seitenansicht;
- Figur 7: eine erfindungsgemäße Befestigungsschraube mit einem als Rohr ausgebildeten Befestigungsabschnitt mit Markierungen in einer Seitenansicht;
- Figur 8: eine weitere erfindungsgemäße Befestigungsschraube mit einem Ansatz zur Verdrehsicherung und einem Befestigungsabschnitt in zwei Seitenansichten;
- Figur 9: zwei weitere, mittels eines Ansatzes miteinander verbundene Befestigungsschrauben in zwei Seitenansichten;
- Figur 10: ein weiteres Ausführungsbeispiel einer erfindungsgemäßen Tragvorrichtung in einer Seitenansicht;
- Figur 11: die Tragvorrichtung gemäß Figur 10 in einer Draufsicht;
- Figur 12: die Tragvorrichtung gemäß Figur 10 in einer Explosionsdarstellung in einer Seitenansicht;
- Figur 13: die Tragvorrichtung gemäß Figur 10 in einer Explosionsdarstellung als Draufsicht;
- Figur 14: eine Draufsicht auf eine weitere erfindungsgemäße Befestigungsschraube in einer Stirnansicht;
- Figur 15: eine Schnittdarstellung der Befestigungsschraube gemäß Fig. 14.

Die aus einem eine Vielzahl von Bauteilen umfassenden "Baukasten" zusammengesetzte Tragvorrichtung 1 dient zum Aufnehmen und Tragen von Karosserieblechen für Kraftfahrzeuge, die in Stufenpressen verarbeitet werden. Die modular aufgebaute Tragvorrichtung 1 weist mehrere miteinander verbundene, rohrartige Hohlprofilträger 2, 3, 4, 5, 6, 7, 8, auf, die als komplettes Bauteil mittels einer Montageplatte 22 an einem Roboter befestigbar ist. An den Hohlprofilträgern 2, 3, 4, 5, 6, 7, 8 sind in definierten Positionen mehrere Greifer 24 angeordnet. Mit den Greifern 24 kann ein Blech aufgenommen und somit von der Tragvorrichtung 1 getragen werden. Anstelle der Greifer 24 könnten andere Bauteile wie Werkzeuge, Messgeräte, Sensoren, Vakuumsaugköpfe oder dgl. angeordnet sein.

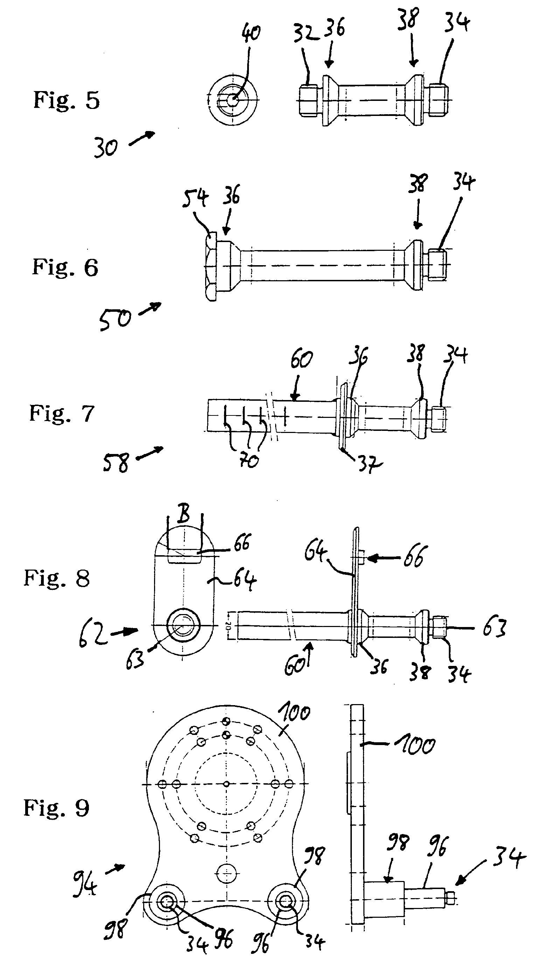

Jeder Hohlprofilträger 2 - 8 hat eine quadratische Kontur und besteht aus Stahl. In den Wänden sind in gleichmäßigen Abständen zueinander kreisförmige Durchgangsbohrungen 26 vorgesehen, wobei sich jeweils zwei Bohrungen 26 paarweise gegenüberliegen. Die Hohlprofilträger 2 - 8 sowie die weiteren Bestandteile der Tragvorrichtung 1 sind mit Hilfe von unterschiedlich gestalteten Befestigungsbolzen oder Befestigungsschrauben miteinander bzw. an den Hohlprofilträgern 2 - 8 lösbar befestigt; sie könnten anschließend zusätzlich verschweißt werden. Unterschiedliche Befestigungsschrauben sind beispielsweise in den Figuren 5 - 9 separat dargestellt und unten näher erläutert.

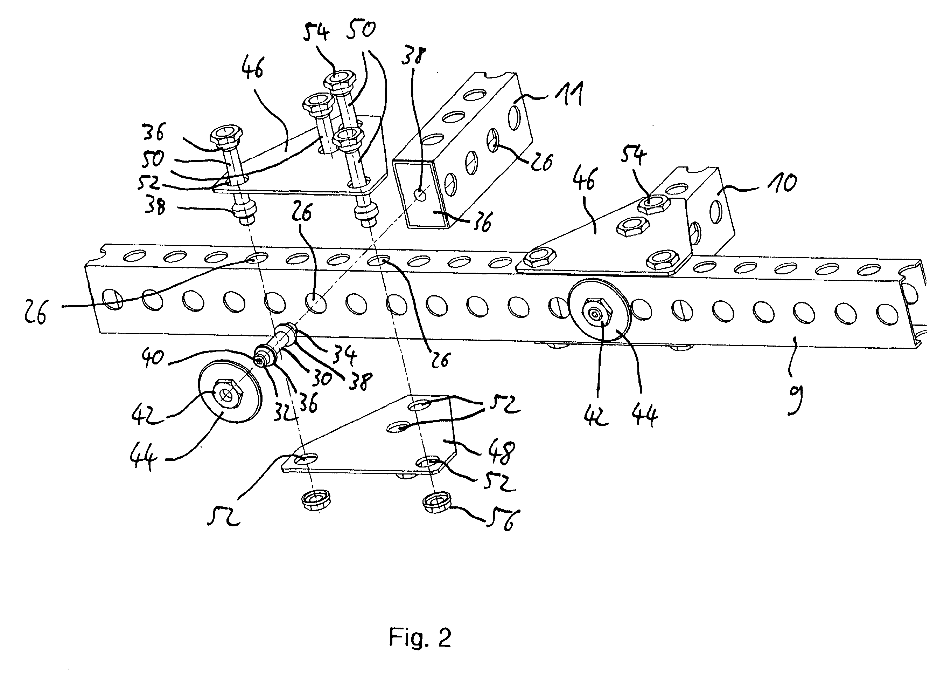

Anhand Figur 2 ist zunächst beschrieben, wie einzelne Hohlprofilträger 9, 10, 11 mit Hilfe erfindungsgemäßer Befestigungsschrauben aneinander befestigt sind. Eine Befestigungsschraube 30, die separat in Figur 5 gezeigt ist, weist an Endabschnitten zwei gegenüberliegende Außengewinde 32, 34 auf, die im montierten Zustand von der äußeren Kontur des Hohlprofilträgers 9 abstehen. Zwei innerhalb der Außengewinde 32, 34 liegende Zentrierabschnitte 36, 38 zentrieren und positionieren die Befestigungsschraube 30 im montierten Zustand an dem Hohlprofilträger 10, in dem sie innerhalb gegenüberliegender Bohrungen 26 liegen, wobei die Außendurchmesser der Zentrierabschnitte 36, 38 und die Innendurchmesser der Bohrungen 26 aneinander angepasst sind.

Die Befestigungsschraube 30 ist mit Ihrem Gewinde 34 in ein an dem Hohlprofilträger 11 an einer rechteckigen, mit dieser verschweißten Deckplatte 36 ausgebildeten Innengewinde 38 verschraubt. Zum Ansetzen eines Drehwerkzeugs, hier eines Imbussschlüssels weist die Befestigungsschraube 30 ein Innensechskant 40 auf. Beide Zentrierabschnitte 36, 38 weisen zylindrische Abschnitt und einen sich konisch verjüngenden kegelstumpfförmigen Abschnitt auf. Eine Mutter 42 mit einem Kopfabschnitt 44 ist auf das Außengewinde 32 aufgeschraubt. Der Kopfabschnitt 44 liegt dabei an dem Hohlprofilträger 9 an. Im monierten Zustand ist sowohl die Befestigungsschraube 30 als auch der Hohlprofilträger 11 definiert an dem Hohlprofilträger 9 positioniert.

Zur zusätzlichen Versteifung sind jeweils zwei gegenüberliegende Versteifungsbleche 46, 48 mit Hilfe weiterer erfindungsgemäßer Befestigungsschrauben 50 einerseits mit dem Hohlprofilträger 9 und andererseits mit dem Hohlprofilträger 11 verschraubt. Zentrierabschnitte 36, 38 legen die Befestigungsschrauben 50 in definierter Position an den Hohlprofilträgern 9, 11 fest, in dem sie in den Bohrungen 26 und Bohrungen 52 der Versteifungsblechen plaziert sind. Die Schrauben 52 sind auch in Figur 6 dargestellt. Sechskantförmige Schraubköpfe 54 sind an Endabschnitten der Befestigungsschrauben 50 vorgesehen. Muttern 56 sind auf die Außengewinde 34 aufgeschraubt.

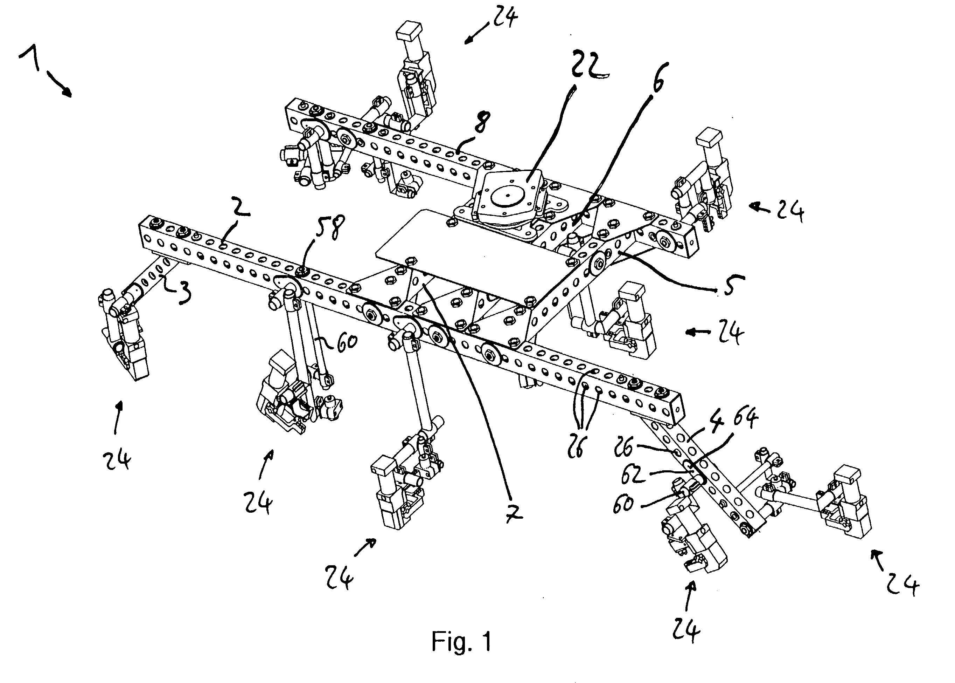

Ein weiteres Ausführungsbeispiel einer erfindungsgemäßen Befestigungsschraube ist in Figur 1 durch das Bezugszeichen 58 gekennzeichnet und ist in Figur 7 separat dargestellt. Es weist einen als Rohr oder Stange ausgebildeten, länglichen Befestigungsabschnitt 60 auf, an dem Befestigungselemente wie Gelenke, ein Werkzeug, ein Werkstück oder weitere Rohre oder Stangen angebracht werden können, wie dies in Figur 1 erkennbar ist. Der Befestigungsabschnitt 60 steht dabei von dem Hohlprofilträger 2 ab. Zwei Zentrierabschnitte 36, 38 liegen im montierten Zustand innerhalb der Bohrungen 26 des Hohlprofilträgers 2, eine Scheibe 37 liegt an einem Hohlprofilträger an. Mittels eines Gewindes 34 ist die Befestigungsschraube 58 lösbar mit dem Hohlprofilträger verbunden. Dadurch, dass die Zentrierabschnitte 36, 38 einen exakte Positionierung der Befestigungsschraube 58 an dem Hohlprofilträger 2 gewährleisten, hat auch der Befestigungsabschnitt 60 eine definierte Stellung relativ zu dem Hohlprofilträger 9, so dass ein an dem Befestigungsabschnitt 60 montiertes Werkzeug, Werkstück definiert positioniert ist.

Ein weiteres Ausführungsbeispiel einererfindungsgemäßen Befestigungsschraube, das in Figur 1 durch das Bezugszeichen 62 und in der Figur 8 dargestellt ist, zeichnet sich aus durch einen plattenförmigen Ansatz 64, der im montierten Zustand an einer Wand des Hohlprofilträgers 4 anliegt und einen länglichen Vorsprung 66 aufweist, dessen Breite B (vgl. Fig. 8) so gewählt ist, dass er innerhalb einer Bohrung 26 des Hohlprofilträgers 4 positionierbar und in dieser Bohrung zentriert ist, so dass der Ansatz 64 und somit die gesamte Befestigungsschraube 62 daran gehindert ist, um eine Längsachse 63 zu rotieren, so dass die Befestigungsschraube 62 drehfest relativ zu dem Hohlprofilträger 4 positioniert ist. Das gleiche gilt somit für einen als Rohr oder Stange ausgebildeten Befestigungsabschnitt 60 der Befestigungsschraube 62, der prinzipiell gleich ausgestaltet ist wie der zuvor anhand von Figur 7 beschriebene Befestigungsansatz 60 und im wesentlichen die selbe Funktion erfüllt; insoweit wird zur Vermeidung von Wiederholungen auf die obigen Beschreibungen Bezug genommen.

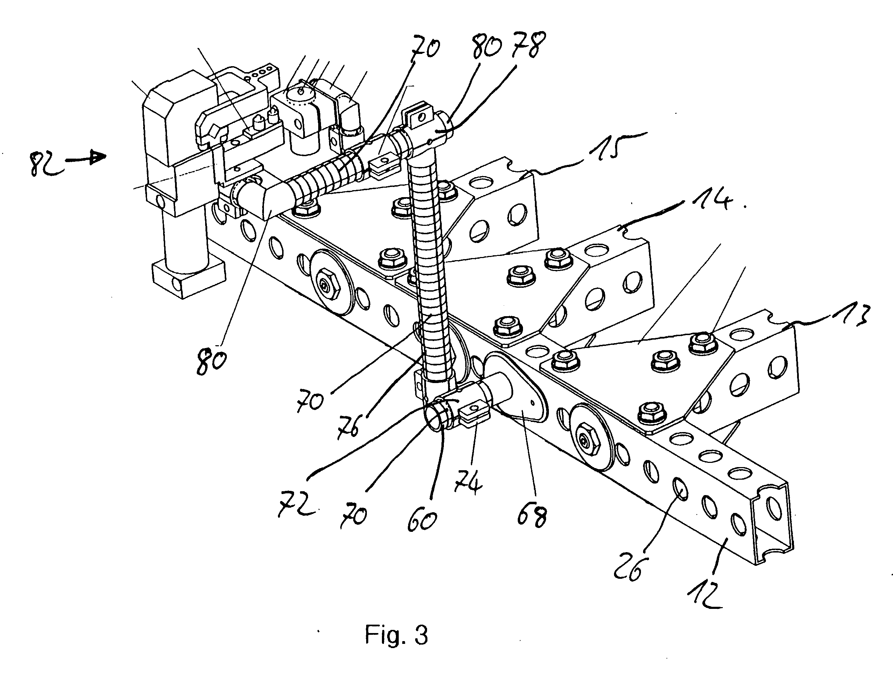

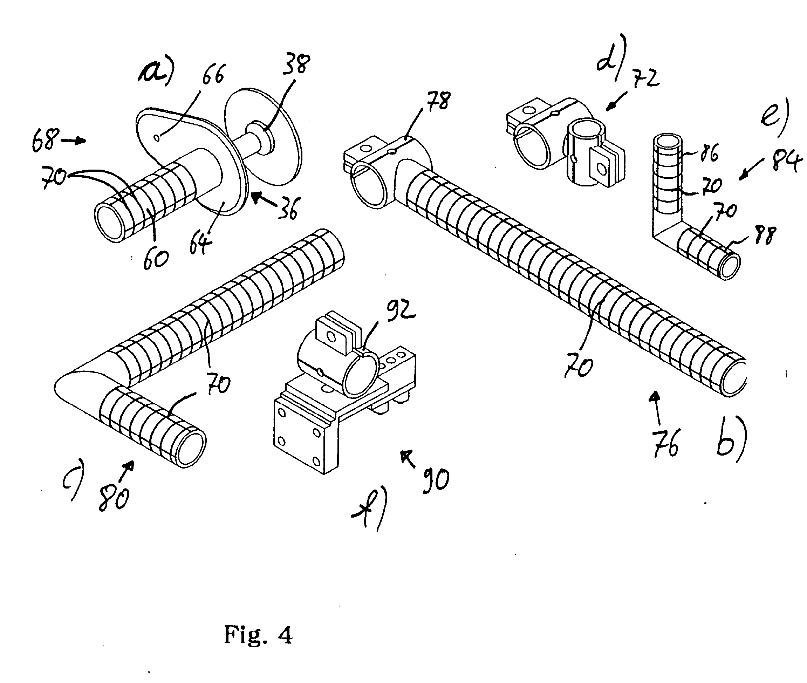

Figur 3 und Figur 4a zeigen eine weitere Befestigungsschraube 68, die einen gegenüber dem in Figur 8 dargestellten Ausführungsbeispiel einen sich mit zunehmenden Abstand von einer Längsachse verjüngenden Ansatz 64 aufweist, an dem ebenfalls ein Vorsprung 66 angeformt ist, der im montierten Zustand innerhalb einer Bohrung 26 des Hohlprofilträgers 12 liegt, während die Zentrierabschnitte 36, 38 in gegenüberliegenden weiteren Bohrungen 26 liegen, so dass die Befestigungsschraube 68 exakt positioniert ist. Ein Befestigungsabschnitt 60 in Form eines Rohres steht im montierten Zustand senkrecht von dem Hohlprofilträger 12 ab, so dass weitere Bauteile an ihm befestigt werden können. An der Außenseite des Befestigungsabschnitts 60 sind eine Vielzahl von gleichmäßig beabstandeten Markierungen 70 in Form von ringförmigen Nuten vorgesehen, die ein Maß für den jeweiligen Abstand zu dem Ansatz 64 und zu dem Hohlprofilträger 12 bilden.

Wie aus Figur 3 ersichtlich ist, ist ein Kreuz-Verbinder-Befestigungselement 72 mit Hilfe nicht dargestellter Spannschrauben, die an Ansätzen 74 angreifen, an den Befestigungsabschnitt 60 angeschraubt. Ein alsT-Verbinder ausgebildetes weiteres Rohr 76 ist mit Hilfe des Befestigungselements 72 montiert, vgl. auch Figur 4b, und nimmt mit seinem an einem Ende angebrachten Spannelement 78 ein weiteres mit ringförmigen Markierungen 70 versehenes Winkel-Rohr 80 auf (vgl. Figuren 3 und 4c). Mit Hilfe der Markierungen 70, die ein Maß für die Länge oder des Abstandes der Rohrabschnitte 76, 80 darstellen, kann eine exakte Positionierung eines Werkzeugs, Werkstücks oder Messgeräts, in Figur 3 durch das Bezugszeichen 82 angedeutet, relativ zu dem Hohlprofilträger 12 und den weiteren Hohlprofilträgern 13, 14, 15 erreicht werden.

Ein Kreuz-Verbinder 72 ist separat in Figur 4d abgebildet. Ein alternatives Winkel-Rohr 84 ist in Figur 4e abgebildet. An den rechtwinklig zueinander angeordneten Rohrabschnitten 86 und 88 sind jeweils gleichmäßig zueinander beabstandete Markierungen 70 in Form von umlaufenden Nuten angebracht. Figur 4f zeigt ein weiteres Befestigungselement 90 mit einer Rohrklemme 92 zur Montage an einem Befestigungsabschnitt 60 oder einem Rohrelement 86, 88. Die Rohre 70, 76, 80, 84 oder Rohrabschnitte könnten auch als Tragelemente bezeichnet werden.

Figur 9 zeigt ein weiteres alternatives Ausführungsbeispiel einer Befestigungsschraube 94 mit zwei beabstandet zueinander angeordneten Gewinden 34 und zwei an jeweils einem Schaft 96 angeformten Zentrierabschnitten 98, die in Bohrungen 26 eines Hohlprofilträgers 2 - 20 im montierten Zustand liegen. Eine Montageplatte 100 verläuft im montierten Zustand parallel zu einer Wand eines Hohlprofilträgers 2 - 20 und dient zur Montage weiterer Bauteile. Aufgrund der beabstandeten jeweils einer Bohrung 26 zugeordneten Zentrierabschnitte 98 ist die gesamte Befestigungsschraube 94 exakt und drehfest montierbar.

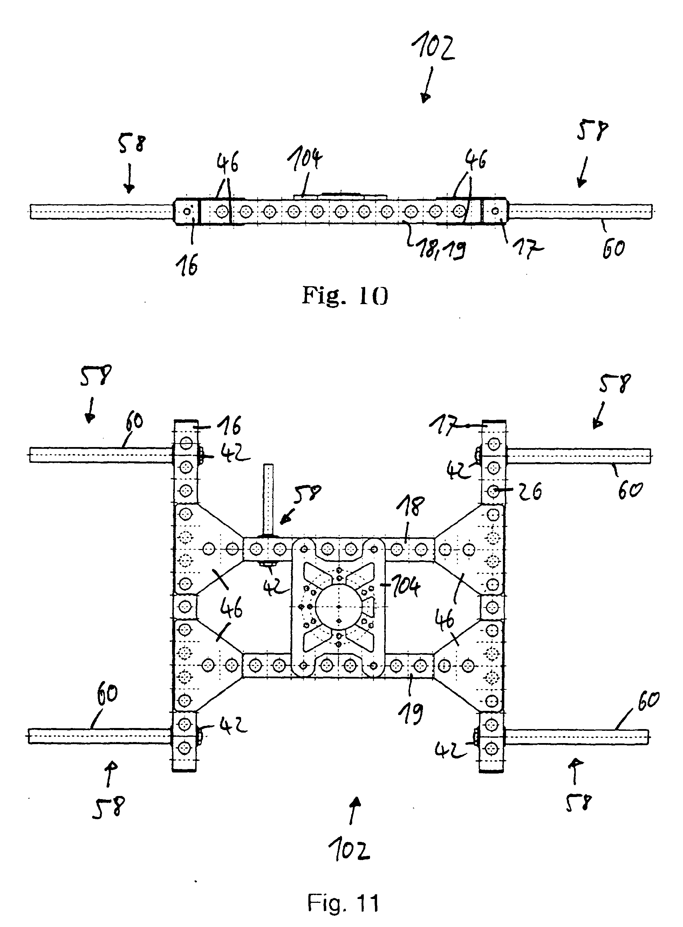

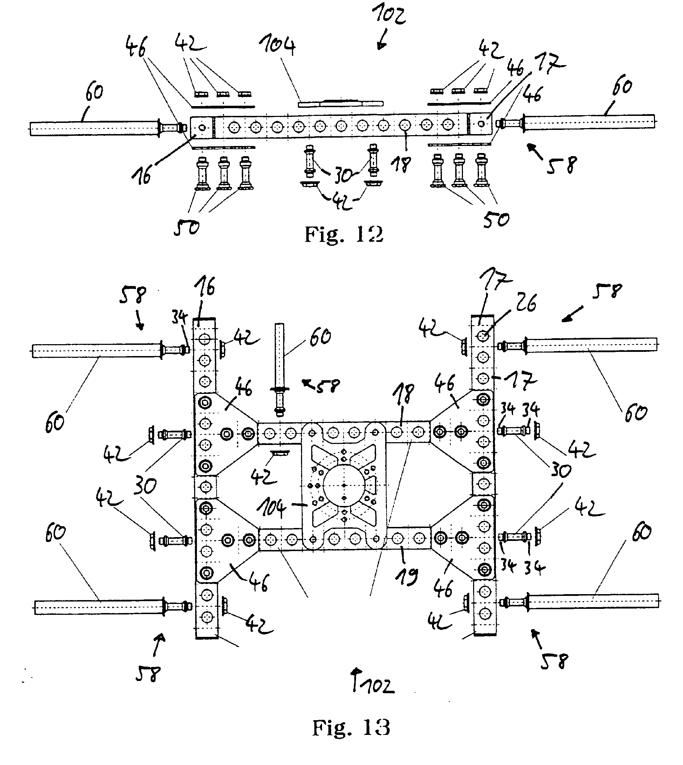

Die Figuren 10 - 13 veranschaulichen ein weiteres Ausführungsbeispiel einer modular aufgebauten Tragvorrichtung 102 in Seitenansichten 10, 12 und Draufsichten 11, 13. Zwei Hohlprofilträger 16, 17 sind mittels zwei weiterer Hohlprofilträger 18, 19 miteinander verbunden. Insgesamt vier erfindungsgemäße Befestigungsschrauben 30 (vgl. auch Fig. 5) sind so in die Hohlprofilträger 16, 17 eingeführt, dass die Zentrierabschnitte 36, 38 in gegenüberliegenden Bohrungen 26 liegen. Muttern 42 sind auf die Gewinde 34 aufgeschraubt, während die gegenüberliegenden Gewinde 34 in Gewinde 38 (vgl. Fig. 2) eingeschraubt sind, die an Deckplatten 36 der Hohlprofilträger 18, 19 vorgesehen sind. Versteifungsbleche 46 (Fig. 2) sind mit Befestigungsschrauben 50 und Muttern 42 (vgl. Fig. 12 und 6) an den Hohlprofilträgern 16 - 19 beidseitig befestigt. Eine Montageplatte 104 ist mit Schrauben 30 und Muttern 42 an den Hohlprofilträgern, 18, 19 befestigt und dienst zur Montage der Tragvorrichtung 102 an einem Roboter, einem Tragarm, einer Presse und dgl. Fünf erfindungsgemäße Befestigungsschrauben 58 (Fig. 7) mit Befestigungsabschnitten 60 sind an die Hohlprofilträger 16, 17 bzw. 18 geschraubt mit Hilfe von Muttern 42, die auf Gewinde 34 (vgl. Fig. 6) aufgeschraubt sind. Die Befestigungsabschnitte 60 sind aufgrund der Zentrierabschnitte 36, 38 der erfindungsgemäßen Befestigungsschrauben 50 exakt rechtwinklig zu den Hohlprofilträgern 16 - 19 angeordnet.

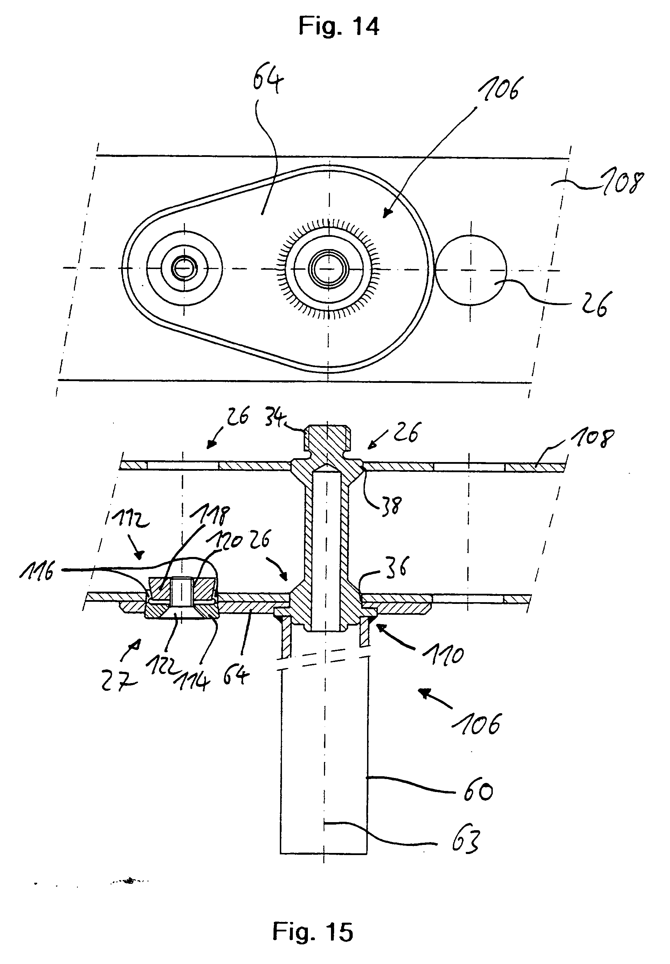

Das in den Figuren 14 und 15 dargestellte weitere Ausführungsbeispiel ähnelt stark der Befestigungsschraube gemäß Fig. 8; auch insoweit sind für gleiche oder ähnliche Teile gleiche Bezugszeichen verwendet. Die Befestigungsschraube 106 ist in einen Hohlprofilträger 108 eingesetzt, wobei Zentrierabschnitte 36, 38 innerhalb gegenüberliegender Bohrungen 26 liegen und für eine exakte Positionierung der Befestigungsschraube 106 und somit des Befestigungsabschnitts 60 sorgen, welcher durch Schweißverbindung 110 angeschweißt ist. Ein plattenförmiger, sich von einer Bohrung zu einer benachbarten Bohrung 27 erstreckender Ansatz 64 ist mit Hilfe eines Einsatzes 112 drehstarr fixiert, welcher innerhalb der Bohrung 27 liegt und dort verspannt ist. Der Einsatz 112 besteht aus einem ersten außen konischen Ring 114, der mehrere gleichmäßig über den Umfang verteilte Schlitze 116 aufweist, einem weiterem außen konisch gestalteten Spannring 118 mit einem Innengewinde 120 sowie einer Spannschraube 122, deren Schraubenkopf in einer Bohrung des Rings 114 liegt und die mit ihrem Außengewinde in das Innengewinde 120 eingeschraubt und durch Anziehen den Spannring 118 in den Ring 114 hineinzieht und dabei den Ring 114 insbesondere im Bereich der Schlitze 116 so aufweitet, dass der gesamte Einsatz 112 fest und sicher positioniert ist, so dass die gesamte Befestigungsschraube 106 drehstarr an dem Hohlprofilträger befestigt ist und keinerlei Drehungen um die Längsachse 63 auftreten können.

## Patentansprüche

1. Modular aufbaubare Tragvorrichtung zum Tragen von Werkzeugen, Werkstücken oder dgl., insbesondere für die automatisierte Handhabung von Werkstücken,
mit mindestens einem rohrartigen Hohlprofilträger (2-19) zum Tragen des Werkzeugs oder dgl., in dessen Wänden paarweise gegenüberliegende Bohrungen (26) ausgebildet sind, und mit mindestens einer Befestigungsschraube (30, 50, 58, 62, 94) zur Befestigung eines Werkzeugs, Werkstücks, eines Befestigungselements oder eines weiteren Hohlprofilträgers (2-19) an dem Hohlprofilträger (2-19), wobei die Befestigungsschraube (30, 50, 58, 62, 94) in gegenüberliegende Bohrungen (26) des Hohlprofilträgers (2-19) einführbar ist, und mit zwei jeweils einer Bohrung im montierten Zustand zugeordneten Zentrierabschnitten zum definierten Positionieren der Befestigungsschraube (30, 50, 58, 62, 94) an dem Hohlprofilträger (2-19),
**dadurch gekennzeichnet, dass** die Befestigungsschraube (30, 50, 58, 62, 94) die zwei Zentrierabschnitte (36, 38) aufweist, welche an einem Schaft der Befestigungsschraube angeformt sind.

2. Tragvorrichtung nach Anspruch 1,
**dadurch gekennzeichnet, dass** die Befestigungsschraube (30, 50, 58, 62, 94) einen im montierten Zustand von dem Hohlprofilträger (2-19) abstehenden Befestigungsabschnitt (60) zur Anbringung eines Werkzeugs, Werkstücks o. dgl. aufweist.

3. Tragvorrichtung nach Anspruch 2,
**dadurch gekennzeichnet, dass** der Befestigungsabschnitt (60) als Rohr oder Stange ausgebildet ist und einstückig mit der Befestigungsschraube (30, 50, 58, 62, 94) ausgebildet oder mit dieser verschweisst ist.

4. Tragvorrichtung nach einem der vorstehenden Ansprüche,
**dadurch gekennzeichnet, dass** an der Befestigungsschraube (30, 50, 58, 62, 94) ein sich von einer Bohrung (26) zu einer weiteren Bohrung (26) des Hohlprofilträgers (2-19) erstreckender Ansatz (64) ausgebildet ist, der einen in die benachbarte Bohrung einführbaren Vorsprung (66) aufweist, so dass die Befestigungsschraube (30, 50, 58, 62, 94) in definierter Drehstellung an dem Hohlprofilträger (2-19) fixierbar ist.

5. Tragvorrichtung nach einem der vorstehenden Ansprüche,
**dadurch gekennzeichnet, dass** an dem Hohlprofilträger (2-19) und/oder dem Befestigungsabschnitt (60) einer Befestigungsschraube (30, 50, 58, 62, 94) und/oder einem Ansatz (64) einer Befestigungsschraube (30, 50, 58, 62, 94) Markierungen (70) ausgebildet oder angebracht sind.

6. Tragvorrichtung nach Anspruch 5,
**dadurch gekennzeichnet, dass** die Markierungen (70) als Nuten oder Erhebungen ausgebildet sind.

7. Tragvorrichtung nach einem der vorstehenden Ansprüche,
**dadurch gekennzeichnet, dass** die Befestigungsschraube (30, 50, 58, 62, 94) zwei Gewinde (32, 34) aufweist, die im montierten Zustand jeweils von dem Hohlprofilträger (2-19) abstehen.

8. Tragvorrichtung nach einem der vorstehenden Ansprüche,
**dadurch gekennzeichnet, dass** die Befestigungsschraube (30, 50, 58, 62, 94) einen Mutternkopf (54) und/oder eine Ausnehmung (40) zum formschlüssigen Ansetzen eines Drehwerkzeugs zum Drehen der Befestigungsschraube (30, 50, 58, 62, 94) aufweist.

9. Tragvorrichtung nach einem der vorstehenden Ansprüche,
**dadurch gekennzeichnet, dass** zwei aneinander befestigte Hohlprofilträger (2-19) mittels eines mehrere Bohrungen (26) aufweisenden Versteifungsblechs (46) aneinander fixiert sind.

10. Tragvorrichtung nach Anspruch 1,
**dadurch gekennzeichnet, dass** an einem Endabschnitt eines Hohlprofilträgers (2-19) ein Gewinde (38) ausgebildet ist und dass eine Befestigungsschraube (30, 50, 58, 62, 94) durch die gegenüberliegenden Bohrungen (26) eines ersten Hohlprofilträgers (2-19) hindurchgesteckt ist und mit ihrem Gewinde (34) mit dem an dem weiteren Hohlprofilträger (2-19) ausgebildeten Gewinde (38) verschraubt ist, so dass zwei Hohlprofilträger (2-19) aneinander befestigt sind.

11. Tragvorrichtung nach Anspruch 10,
**dadurch gekennzeichnet, dass** das Gewinde (38) des Hohlprofilträgers (2-19) an einer mit dem Hohlprofilträger (2-19) verschweissten Endplatte (36) ausgebildet ist.

12. Tragvorrichtung nach einem der vorstehenden Ansprüche,
**dadurch gekennzeichnet, dass** die Gewinde (38) aufweisende Endplatte (36) schrägwinklig relativ zu einer Längsachse des Hohlträgerprofils angeordnet ist.

13. Tragvorrichtung nach einem der vorstehenden Ansprüche,
**dadurch gekennzeichnet, dass** die Hohlprofilträger (2-19) einen quadratischen oder rechteckigen Querschnitt aufweisen und die Bohrungen (26) in gleichen Abständen zueinander angeordnet sind.

14. Tragvorrichtung nach mindestens einem der vorstehenden Ansprüche,
**dadurch gekennzeichnet, dass** ein sich von einer Bohrung (26) zu einer benachbarten Bohrung (26) des Hohlprofilträgers (2-19) erstreckender Ansatz (64) vorgesehen ist, in dem eine mit im montierten Zustand mit einer Bohrung (26) des Hohlprofilträgers fluchtende Bohrung (27) ausgebildet ist, in die ein mit dem Hohlprofilträger (108) und dem Ansatz (64) durch Aufweitung verspannbarer Einsatz (112) einsetzbar ist.

15. Tragvorrichtung nach Anspruch 14,
**dadurch gekennzeichnet, dass** der Einsatz (112) einen außen konischen Ring (114), einen weiteren, teilweise in den (114) einsetzbaren weiteren Spannring (118) und eine Spannschraube (122) zum Verspannen des Einsatzes (112) aufweist.

## Claims

1. A support apparatus capable of being built up in a modular manner for supporting tools, workpieces or the like, in particular for the automatic manipulation of workpieces,
with at least one tubular hollow-profile support (2 to 19) for supporting the tool or the like, in the walls of which bores (26) which are opposed pair-wise are formed, and with at least one fastening screw (30, 50, 58, 62, 94) for fastening a tool, a workpiece, a fastening element or a further hollow-profile support (2 to 19) to the follow-profile support (2 to 19), wherein the fastening screw (30, 50, 58, 62, 94) is capable of being inserted into opposed bores (26) of the hollow-profile support (2 to 19), and with two centring portions associated in each case with a bore in the assembled state for the defined positioning of the fastening screw (30, 50, 58, 62, 94) on the hollow-profile support (2 to 19),
**characterized in that** the fastening screw (30, 50, 58, 62, 94) has the two centring portions (36, 38) which are formed integrally on a shank of the fastening screw.

2. A support apparatus according to Claim 1, **characterized in that** the fastening screw (30, 50, 58, 62, 94) has a fastening portion (60) projecting from the hollow-profile support (2 to 19) in the assembled state for the attachment of a tool, a workpiece or the like.

3. A support apparatus according to Claim 2, **characterized in that** the fastening portion (60) is constructed in the form of a tube or rod and is constructed in one piece with the fastening screw (30, 50, 58, 62, 94) or is welded to the latter.

4. A support apparatus according to any one of the preceding Claims, **characterized in that** an attachment (64), which extends from one bore (26) to a further bore (26) in the hollow-profile support (2 to 19) and which has a projection (66) capable of being inserted into the adjacent bore, is formed on the fastening screw (30, 50, 58, 62, 94), so that the fastening screw (30, 50, 58, 62, 94) is capable of being fixed on the hollow-profile support (2 to 19) in a defined rotational setting.

5. A support apparatus according to any one of the preceding Claims, **characterized in that** markings (70) are formed on and/or applied to the hollow-profile support (2 to 19) and/or the fastening portion (60) of a fastening screw (30, 50, 58, 62, 94) and/or an attachment (64) of a fastening screw (30, 50, 58, 62, 94).

6. A support apparatus according to Claim 5, **characterized in that** the markings (70) are in the form of grooves or raised portions.

7. A support apparatus according to any one of the preceding Claims, **characterized in that** the fastening screw (30, 50, 58, 62, 94) has two threads (32, 34) which project in each case from the hollow-profile support (2 to 19) in the assembled state.

8. A support apparatus according to any one of the preceding Claims, **characterized in that** the fastening screw (30, 50, 58, 62, 94) has a nut head (54) and/or a recess (40) for mounting a rotary tool in a positively locking manner for turning the fastening screw (30, 50, 58, 62, 94).

9. A support apparatus according to any one of the preceding Claims, **characterized in that** two hollow-profile supports (2 to 19) fastened to each other are fixed to each other by means of a reinforcement sheet (46) having a plurality of bores (26).

10. A support apparatus according to Claim 1, **characterized in that** a thread (38) is formed on an end portion of a hollow-profile support (2 to 19), and a fastening screw (30, 50, 58, 62, 94) is introduced through the opposed bores (26) of a first hollow-profile support (2 to 19) and is screwed with its thread (34) with the thread (38) formed on the further hollow-profile support (2 to 19), so that two hollow-profile supports (2 to 19) are fastened to each other.

11. A support apparatus according to Claim 10, **characterized in that** the thread (38) of the hollow-profile support (2 to 19) is formed on an end plate (36) welded to the hollow-profile support (2 to 19).

12. A support apparatus according to any one of the preceding Claims, **characterized in that** the end plate (36) provided with [the] thread (38) is arranged at an oblique angle relative to a longitudinal axis of the hollow-profile support.

13. A support apparatus according to any one of the preceding Claims, **characterized in that** the hollow-profile supports (2 to 19) have a square or rectangular cross-section, and the bores are arranged at equal distances from one another.

14. A support apparatus according to any one of the preceding Claims, **characterized in that** an attachment (64) is provided which extends from one bore (26) to an adjacent bore (26) in the hollow-profile support (2 to 19) and in which is formed a bore (27) which is in alignment with a bore (26) in the hollow-profile support in the assembled state and into which an insert (112) capable of being clamped to the hollow-profile support (108) and the attachment (64) by widening is capable of being inserted.

15. A support apparatus according to Claim 14, **characterized in that** the insert (112) has a ring (114) conical on the outside, a further clamping ring (118) capable of being inserted in part into the [ring] (114) and a clamping screw (122) for clamping the insert (112).

## Revendications

1. Dispositif support à assemblage modulaire pour porter des outils, des pièces usinées ou similaires, notamment pour la manipulation automatisée de pièces usinées,
avec au moins un support de profilé creux tubulaire (2 à 19) pour porter l'outil ou similaire, dans les parois duquel sont ménagés des perçages (26) opposés, et avec au moins une vis de fixation (30, 50, 58, 62, 94) pour la fixation d'un outil, d'une pièce usinée, d'un élément de fixation ou d'un support de profilé creux supplémentaire (2 à 19) sur le support de profilé creux (2 à 19), la vis de fixation (30, 50, 58, 62, 94) étant insérable dans des perçages (26) opposés du support de profilé creux (2 à 19) et avec deux parties de centrage associées chacune à un perçage en position montée, pour le positionnement défini de la vis de fixation (30, 50, 58, 62, 94) sur le support de profilé creux (2 à 19),
**caractérisé en ce que** la vis de fixation (30, 50, 58, 62, 94) comporte les deux parties de centrage (36, 38) qui sont rapportées sur une tige de la vis de fixation.

2. Dispositif support selon la revendication 1,
**caractérisé en ce que** la vis de fixation (30, 50, 58, 62, 94) comporte une partie fixation (60) débordant du support de profilé creux (2 à 19) en position montée, pour le montage d'un outil, d'une pièce à usiner ou similaire.

3. Dispositif support selon la revendication 2,
**caractérisé en ce que** la partie fixation (60) est conçue sous la forme d'un tube ou d'une barre et conçue en monobloc avec la vis de fixation (30, 50, 58, 62, 94) ou soudée sur cette dernière.

4. Dispositif support selon l'une quelconque des revendications précédentes,
**caractérisé en ce que** sur la vis de fixation (30, 50, 58, 62, 94) est conçu un embout (64) s'étendant d'un perçage (26) vers un autre perçage (26) du support de profilé creux (2 à 19), qui comporte une saillie (66) insérable dans le perçage voisin, pour que la vis de fixation (30, 50, 58, 62, 94) soit susceptible d'être fixée dans une position rotative définie sur le support de profilé creux (2 à 19).

5. Dispositif support selon l'une quelconque des revendications précédentes,
**caractérisé en ce que** sur le support de profilé creux (2 à 19) et/ou sur la partie fixation (60) d'une vis de fixation (30, 50, 56, 62, 94) et/ou d'un embout (64) d'une vis de fixation (30, 50, 58, 62, 94) sont conçus ou montés des marquages (70).

6. Dispositif support selon la revendication 5,
**caractérisé en ce que** les marquages (70) sont conçus sous la forme de rainures ou d'élévations.

7. Dispositif support selon l'une quelconque des revendications précédentes,
**caractérisé en ce que** la vis de fixation (30, 50, 58, 62, 94) comporte deux filetages (32, 34), qui en position montée s'éloignent chacun du support de profilé creux (2 à 19).

8. Dispositif support selon l'une quelconque des revendications précédentes,
**caractérisé en ce que** la vis de fixation (30, 50, 58, 62, 94) comporte un bouton d'écrou (54) et/ou un évidement (40), pour l'application par complémentarité de forme d'un outil de rotation pour faire tourner la vis de fixation (30, 50, 58, 62, 94).

9. Dispositif support selon l'une quelconque des revendications précédentes,
**caractérisé en ce que** deux supports de profilé creux (2 à 19) fixés l'un sur l'autre sont fixés l'un sur l'autre au moyen d'une tôle de renfort (46) comportant plusieurs perçages (26).

10. Dispositif support selon la revendication 1,
**caractérisé en ce que** sur une section d'extrémité d'un support de profilé creux (2 à 19) est formé un taraudage (38) et **en ce qu'**une vis de fixation (30, 50, 58, 62, 94) est enfilée à travers le perçage (26) opposé d'un premier support de profilé creux (2 à 19) et vissée par son filetage (34) dans le taraudage (38) formé sur le support de profilé creux supplémentaire (2 à 19), de sorte que deux supports de profilé creux (2 à 19) soient fixés l'un sur l'autre.

11. Dispositif support selon la revendication 10,
**caractérisé en ce que** le taraudage (38) du support de profilé creux (2 à 19) est ménagé sur une plaque d'extrémité (36) soudée sur le support de profilé creux (2 à 19).

12. Dispositif support selon l'une quelconque des revendications précédentes,
**caractérisé en ce que** la plaque d'extrémité (36) comportant le taraudage (38) est disposée à angle oblique par rapport à un axe longitudinal du support de profilé creux.

13. Dispositif support selon l'une quelconque des revendications précédentes,
**caractérisé en ce que** les supports de profilé creux (2 à 19) présentent une section transversale quadratique ou rectangulaire et **en ce que** les perçages (26) sont disposés à distance égale l'un par rapport à l'autre.

14. Dispositif support selon au moins l'une quelconque des revendications précédentes,
**caractérisé en ce qu'**il est prévu un embout (64) s'étendant d'un perçage (26) vers un perçage voisin (26) du support de profilé creux (2 à 19) dans lequel est ménagé un perçage (27) aligné en position montée sur un perçage (26) du support de profilé creux, dans lequel est inséré un insert (112) susceptible d'être serré par évasement sur le support de profilé creux (108) et sur l'embout (64).

15. Dispositif support selon la revendication 14,
**caractérisé en ce que** l'insert (112) comporte une bague extérieure conique (114), une bague de serrage supplémentaire (118) susceptible d'être insérée partiellement dans la bague extérieure conique (114) et une vis de serrage (122) pour le serrage de l'insert (112).
